# DEMANDE DE BREVET EUROPEEN

(11) **EP 1 400 736 A1**
(43) Date de publication de la demande: **24.03.2004**
(21) Numéro de dépôt: 03077936.7
(22) Date de dépôt: 17.09.2003
(51) Int. Cl.: F16K 1/52

(54) **Robinet**

(30) Priorité: 20.09.2002 US 247949
(71) Demandeur: Torrent Trading Ltd., Road Town, Tortola (VG)
(72) Inventeur: Kerger, Leon, 5613 Mondorf-les-Bains (LU); Schmitz, Jean-Claude, 7340 Heisdorf (LU)
(74) Mandataire: Meyers, Ernest

(57) **Abrégé**

Le robinet destiné au contrôle de l'écoulement d'un fluide, par exemple d'un gaz, comprend un corps de robinet (10), un organe intérieur d'ouverture et de fermeture du passage des gaz, un volant de manoeuvre rotatif extérieur (16), un moyen de liaison (20) reliant le volant de manoeuvre (16) à l'organe de fermeture, ainsi que des moyens limitant le mouvement de l'organe de manoeuvre dans le sens de l'ouverture constitués par une butée (24) et une contre-butée (22) à contact frontal, disposées respectivement sur un élément rotatif du corps du robinet (10) ou vice-versa. Pour assurer un contact mutuel maximal entre la butée (24) et la contre-butée (22), la position angulaire de la butée (24) est ajustable.

## Description

La présente invention concerne un robinet pour le contrôle l'écoulement d'un fluide comprenant un corps de robinet, un organe intérieur d'ouverture et de fermeture du passage du fluide, un organe de manoeuvre rotatif manoeuvrable sur plusieurs tours de rotation, un moyen de liaison reliant l'organe de manoeuvre à l'organe de fermeture, ainsi que des moyens limitant le mouvement de l'organe de manoeuvre et de l'organe d'ouverture et de fermeture dans le sens de l'ouverture du robinet, ces moyens étant constitués par une butée et une contre-butée à contact frontal, disposées respectivement sur un élément rotatif et sur le corps du robinet ou vice versa et dont le contact mutuel ne s'établit que lors du dernier tour de rotation de l'organe de manoeuvre. L'invention concerne également un procédé d'assemblage d'un tel robinet.

Un robinet de ce genre est décrit dans EP 1 124 081 A1. Un tel robinet est destiné à éliminer ou réduire les risques de serrage ou de blocage du robinet lorsque celui-ci est ouvert à fond. En effet, dans les robinets classiques, la fin du mouvement d'ouverture est déterminée par le contact entre une butée et une contre-butée se trouvant respectivement sur un élément fixe et un élément rotatif du robinet. Ce contact est réalisé par une approche tangentielle des deux éléments donc un contact à friction ou frottement avec un serrage progressif pouvant conduire au blocage du robinet en position d'ouverture lorsque le robinet est ouvert à fond.

Pour éviter ce risque, le robinet du document précité comporte une butée et une contre-butée à contact frontal sans friction ou frottement entre les butées et, par conséquent, sans risque de serrage excessif ou de blocage du robinet en position d'ouverture. L'opérateur pourra facilement refermer le robinet sans déploiement d'une force excessive et sans risque de se tromper de sens de rotation ou de serrer davantage le robinet.

Lors de l'ouverture et à l'avant-dernier tour de rotation de l'organe de manoeuvre, la butée et la contre-butée n'entrent pas encore en contact, ce qui signifie que, lorsqu'elles arrêtent la rotation de l'organe de manoeuvre, elles sont en contact mutuel sur une hauteur qui est inférieure au pas de vis des filetages entre les éléments rotatifs et le corps du robinet.

Pour qu'un robinet tel que décrit ci-dessus fonctionne de manière fiable il est souhaitable que la butée et la contre-butée se contactent par une grande partie de leurs surfaces mutuelles c'est à dire sur la majeure partie de leur longueur axiale. Si par exemple, la butée et la contre-butée sont, à l'avant-dernier passage de la butée en regard de la contre-butée, séparées encore d'une distance axiale qui est à peine inférieure à celle du pas de vis qui assure le déplacement axial de la butée mobile, les deux butées entreront en contact mutuel seulement par leurs bords axiaux respectifs pour arrêter la manoeuvre. Or ceci peut, à la longue, occasionner une usure de leur bord de contact et finalement aboutir à un contact frictionnel pour se retrouver dans la situation problématique décrite plus haut.

Ce risque est donc tributaire des paramètres qui sont déterminants pour la surface de contact entre la butée et la contre-butée. Il s'agit, en l'occurrence, du pas de vis qui assure le déplacement axial de la butée mobile, des positions angulaires respectives de la butée mobile et de la contre-butée ainsi que de la manière d'assemblage.

Le but de la présente invention est de prévoir un robinet perfectionné du genre décrit dans le préambule qui compote des moyens pour assurer un contact maximal entre la butée et la contre-butée ainsi qu'un procédé d'assemblage d'un tel robinet.

Pour atteindre cet objectif, la présente invention prévoit un robinet du genre décrit dans le préambule qui comporte les caractéristiques de la revendication 1.

Cet arrangement permet un assemblage du robinet tel qu'à l'avant-dernier passage de la butée en regard de la contre-butée lors de l'ouverture du robinet, la distance axiale entre celles-ci soit minimale, juste assez pour leur permettre de se croiser sans contact. On est ainsi assuré, à la fin du tour suivant d'un contact frontal maximal entre la butée et la contre-butée. A cet effet, l'invention concerne également un procédé d'assemblage d'un tel robinet avec les caractéristiques de la revendication 5.

Selon un mode de réalisation avantageux, l'organe de manoeuvre extérieur est monté de manière amovible sur le moyen de liaison par une fixation dont la position angulaire est ajustable.

Cette fixation peut comporter des crénelures périphériques longitudinales sur le moyen de liaison qui coopèrent avec des crénelures longitudinales prévues à la périphérie intérieure d'un alésage dans l'organe de manoeuvre.

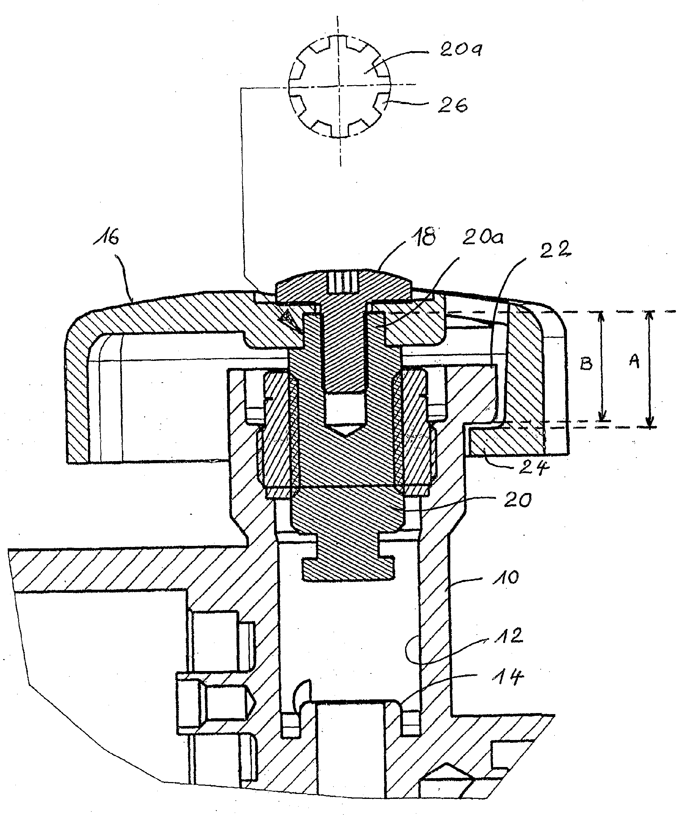

D'autres particularités et caractéristiques de l'invention ressortiront de la description d'un mode de réalisation avantageux présenté ci-dessous, à titre d'illustration, à la figure unique qui montre schématiquement une coupe verticale à travers la partie supérieure d'un robinet selon la présente invention.

Pour les besoins de la compréhension de la présente invention, on ne décrira que les éléments nécessaires à sa mise en oeuvre. Pour plus de détails, le lecteur pourra se référer au document EP 1 124 081 A1 dont la présente invention constitue un perfectionnement.

Le robinet comporte un corps de robinet 10, de préférence en métal, par exemple en bronze et qui est traversé axialement par un alésage cylindrique 12 dans lequel se trouve un siège 14 à l'intersection d'un raccord d'admission et d'un raccord de sortie de fluide par exemple de gaz.

Le robinet peut être actionné par un volant de manoeuvre 16 ou moyen équivalent qui est fixé par exemple à l'aide d'une vis 18 ou de toute autre manière sur une tige de liaison 20 qui est vissée dans la partie supérieure du corps 10 ou d'une douille intermédiaire comme montrée sur la figure. Du côté opposé au volant 16 la tige 20 est reliée directement ou indirectement à un organe d'ouverture ou de fermeture, non montré, qui coopère avec le siège 14 pour libérer ou fermer le passage du gaz. L'organe d'ouverture et de fermeture pourrait aussi constituer la partie inférieure de la tige 20 quoique ce soit préférable d'avoir un organe d'ouverture et de fermeture séparé qui ne tourne pas avec la tige de liaison 20 pour éviter des frictions rotatives au niveau du joint.

Une rotation du volant de manoeuvre 16 engendre par conséquent une translation axiale de la tige 20 et de l'organe d'ouverture et de fermeture dans l'alésage 12 du corps 10 du robinet.

Le corps du robinet 10 comporte sur son bord supérieur une contre-butée 22 qui s'étend radialement vers l'extérieur et qui est destinée à arrêter une butée 24 qui s'étend radialement vers l'intérieur à partir de la base du volant 16.

Le médaillon au-dessus de la figure montre une coupe transversale à travers l'extrémité supérieure 20a de la tige de liaison 20 qui est destinée à recevoir le volant de manoeuvre. Cette partie 20a est crénelée sur toute sa périphérie extérieure par une série de crénelures verticales 26 qui s'étendent sur toute la hauteur de pénétration du volant de manoeuvre 16. L'alésage dans le volant qui pénètre dans la tête 20a de la tige comporte à sa périphérie intérieure des crénelures correspondantes. Ces crénelures permettent, lors de la pose du volant 16 sur la tête 20a de la tige 20 et avant la fixation par la vis 18 de choisir la position angulaire optimale du volant 16 qui correspond à un contact maximal entre la butée 24 et la contre-butée 22 à la fin de l'ouverture.

Le montage par crénelures montré sur la figure peut bien entendu être remplacé par des moyens techniquement équivalent comme par exemple des pourtours polygonaux extérieurs et intérieurs complémentaires de la tête 20a et de l'alésage du volant.

En pratique, le montage est réalisé de la manière suivante, sachant que, comme le montre la figure, la distance A est la distance entre le bord supérieur de la butée 24 et base du centre du volant 16 qui repose sur la tête 20a de la tige 20 et la distance B est la distance entre le bord inférieur de la contre-butée 22 et le bord supérieur de la tête 20a de la tige 20. Si la distance A est fixe, la distance B varie selon la position de la tige 20 et du volant. Avant de monter le volant de manoeuvre 16, on tourne la tige 20 dans le sens de l'ouverture ce qui fait sortir la tige 20 du corps 10 et augmente la distance B. Cette rotation est poursuivie jusqu'à ce que la différence entre la distance A et la distance B soit minimale par exemple une fraction de mm. Pour surveiller l'augmentation de la distance B, il est possible, avant de tourner la tige 20 d'y monter provisoirement (sans fixation) le volant 16 par les crénelures 26 et on l'enlève lorsque la position axiale souhaitée de la tige 20 est atteinte. On engage ensuite, au niveau des crénelures 26, le volant 16 sur la tête 20a en ayant soin que le volant 16 se trouve dans une position angulaire où la butée 24 est le plus prés possible de la contre-butée 22. En effet la contre-butée 22 et la butée 24 ne peuvent pas se trouver dans la même position angulaire sinon elles gêneraient la mise en place du volant 16. On peut ensuite fixer le volant 16 en serrant sa vis de fixation 18. Autrement dit, on réalise le montage du volant 16 dans une position d'ouverture du robinet qui correspond à l'avant-dernier tour de rotation du volant 16 en vue de l'ouverture. En effet, vu la faible distance entre le bord supérieur de la butée 24 et le bord inférieur de la contre-butée 22, si l'on effectue un tour de rotation supplémentaire du volant 16, la butée 24 ne peut plus croiser la contre-butée 22 et il y aura un contact frontal entre celles-ci sur une surface relativement grande.

Si le montage a été décrit ci-dessus au "ralenti" il est évident, qu'en pratique, le montage est effectué de manière automatique et programmé sous le contrôle de capteurs.

Si le mode de réalisation de la figure a été décrit en référence à des butées extérieures, l'homme du métier pourra imaginer une solution similaire avec des butées intérieures comme dans le mode de réalisation du document EP 1 124 081.

## Revendications

1. Robinet pour le contrôle de l'écoulement d'un fluide comprenant un corps de robinet (10), un organe intérieur d'ouverture et de fermeture du passage du fluide, un organe de manoeuvre rotatif manoeuvrable sur plusieurs tours de rotation, un moyen de liaison (20) reliant l'organe de manoeuvre (16) à l'organe de fermeture, ainsi que des moyens limitant le mouvement de l'organe de manoeuvre (16) et de l'organe d'ouverture et de fermeture dans le sens de l'ouverture du robinet, ces moyens limitant le mouvement de l'organe de manoeuvre étant constitués par une butée (24) et une contre-butée (22) à contact frontal, disposées respectivement sur un élément rotatif et sur le corps du robinet (10) ou vice versa et dont le contact mutuel ne s'établit qu'à la fin du dernier tour de rotation de l'organe de manoeuvre **caractérisé par** des moyens permettant d'ajuster les positions angulaires mutuelles de la butée (24) et de la contre-butée (22) pendant une immobilisation de l'organe d'ouverture et de fermeture.

2. Robinet selon la revendication 1, **caractérisé en ce que** l'organe de manoeuvre extérieur (16) est monté de manière amovible sur le moyen de liaison (20) par une fixation dont la position angulaire est ajustable.

3. Robinet selon la revendication 2, **caractérisé en ce que** ladite fixation comporte des crénelures périphériques longitudinales (26) sur le moyen de liaison (20) qui coopèrent avec des crénelures longitudinales correspondantes prévues à la périphérie intérieure d'un alésage dans l'organe de manoeuvre.

4. Robinet selon l'une quelconque des revendications 1 à 3, **caractérisé en ce que** la butée (24) est solidaire de l'organe de manoeuvre extérieur (16).

5. Procédé d'assemblage d'un robinet selon la revendication 1, dans lequel l'organe de liaison (20) est vissé dans le corps du robinet (10) dans une douille intermédiaire **caractérisé en ce que** l'on déplace, par rotation, l'organe de liaison (20) dans une position axiale correspondant à une distance axiale minimale entre la butée (24) et la contre-butée (22), **en ce que** l'on fixe dans cette position, l'organe de manoeuvre (16) sur l'organe de liaison (20) dans une position angulaire correspondant à une juxtaposition angulaire de la butée (24) et de la contre-butée (22) ladite distance axiale quoique étant minimale est suffisante pour que la butée (24) puisse croiser sans heurt la contre-butée (22) en cas de rotation de l'organe de manoeuvre (16) dans le sens de l'ouverture du robinet.
